# EUROPEAN PATENT APPLICATION

(11) **EP 3 113 089 A1**
(43) Date of publication of application: **04.01.2017**
(21) Application number: 16177414.6
(22) Date of filing: 01.07.2016
(51) Int. Cl.: G06Q 10/06, G06Q 10/08, G06Q 50/04, G06Q 50/28

(54) **METHOD, SYSTEM AND APPARATUS FOR MULTI-SITE PRODUCTION SCHEDULING**

(30) Priority: 02.07.2015 US 201562188081 P
(71) Applicant: Nulogy Corporation, Toronto, Ontario M5V 3B1 (CA)
(72) Inventor: PARK, Clemens, Toronto, Ontario M6K 3N9 (CA); SOBOCINSKI, Paul, Toronto, Ontario M5V 2M6 (CA); LOMAS, Adam, Toronto, Ontario M6J 1B1 (CA); CHEONG-KEE-YOU, Jason, Toronto, Ontario M6K 1C5 (CA); WOLOSHYN, Cameron, Toronto, Ontario M6G 2W8 (CA); LIU, Jessica, Toronto, Ontario M4V 2Z2 (CA); YUEN, Jason A., Toronto, Ontario M4L 3P8 (CA); STEPHENS-WELLS, Jenna, Toronto, Ontario M4C 2K1 (CA)
(74) Representative: ABG Patentes, S.L.

(57) **Abstract**

A computing device is provided, comprising: a communications interface; a memory storing a plurality of item records, a plurality of line records containing attributes of production lines, and a plurality of site records each containing identifiers of a subset of the production lines; and a processor interconnected with the communications interface and the memory. The processor is configured to: receive a project including an item identifier corresponding to an item record; retrieve at least one of the site records; retrieve the item record corresponding to the item identifier, and the line records identified in the at least one retrieved site record; and select one of the retrieved line identifiers for the project based on the retrieved site records, the retrieved item record and the retrieved line records.

## Description

### FIELD

The specification relates generally to controlling production facilities, and specifically to a method, system and apparatus for multi-site production scheduling.

### BACKGROUND

The production of goods by entities such as contract packagers and contract manufacturers, for coordinating entities such as brands, involves various challenges. A given brand entity may contract a number of distinct contract packagers or manufacturers (or both) to produce a certain article. Further, production of the article by each of the contract entities can be characterized by high variability in the nature of goods being produced, as well as short production runs. The scheduling of such production runs thus presents various challenges. For example, a large number of distinct articles may need to be produced in a relatively short period of time, using a plurality of production lines each with different capabilities.

### SUMMARY

According to an aspect of the specification, a computing device is provided, comprising: a communications interface; a memory storing a plurality of item records, a plurality of line records containing attributes of production lines, and a plurality of site records each containing identifiers of a subset of the production lines; a processor interconnected with the communications interface and the memory, the processor configured to: receive a project including an item identifier corresponding to an item record; retrieve at least one of the site records; retrieve the item record corresponding to the item identifier, and the line records identified in the at least one retrieved site record; and select one of the retrieved line identifiers for the project based on the retrieved site records, the retrieved item record and the retrieved line records.

### BRIEF DESCRIPTIONS OF THE DRAWINGS

Embodiments are described with reference to the following figures:
FIG. 1 depicts a system for manufacturing articles, according to a non-limiting embodiment;
FIG. 2 depicts additional components of the system of FIG. 1, according to a non-limiting embodiment;
FIG. 3 depicts certain internal components of the scheduler computing device of FIG. 2, according to a non-limiting embodiment;
FIG. 4 depicts a method of schedule generation in the system of FIGS. 1 and 2, according to a non-limiting embodiment;
FIG. 5 depicts an example implementation of the system of FIGS. 1 and 2, according to a non-limiting embodiment; and
FIG. 6 depicts another example implementation of the system of FIGS. 1 and 2, according to a non-limiting embodiment

### DETAILED DESCRIPTION OF THE EMBODIMENTS

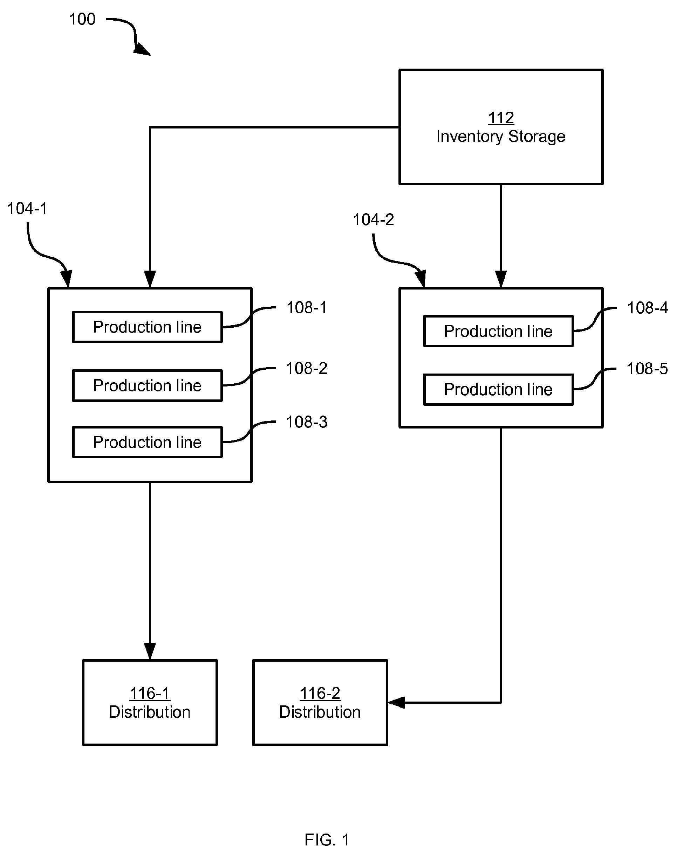

FIG. 1 depicts a system 100 for manufacturing articles. Any of a wide variety of articles can be manufactured within system 100. For example, the articles can include food products, cosmetic products, kits comprising a plurality of products manufactured elsewhere, and the like.

The articles manufactured in system 100 are manufactured at one or more production sites, such as sites 104-1 and 104-2 shown in FIG. 1 (collectively referred to as sites 104, and generically referred to as a site 104; this nomenclature is also used for other reference numerals herein). For example, site 104-1 may be operated by a first entity such as a contract packager, while site 104-2 may be operated by a second entity such as another contract packager. In some embodiments, sites 104-1 and 104-2 can both be operated by the same contract packager entity, however. In general, sites 104 are physically separated from each other. For example, sites 104 can be located in distinct buildings, located on either the same plot of land or different plots of land (e.g. in different cities or countries).

Each site 104 includes one or more production lines. In particular, site 104-1 includes production lines 108-1, 108-2 and 108-3, while site 104-2 includes production lines 108-4 and 108-5. Each line 108 can include any of a variety of equipment, such as conveyors, bag sealers and the like. In general, each line 108 is configured to receive inventory in the form of subcomponents from an inventory storage facility 112, and to convert the subcomponents into the above-mentioned articles. The finished articles can then be transported to one or more distribution facilities 116 (two such facilities, 116-1 and 116-2, are shown in FIG. 1). From distribution facilities 116, the finished articles can be delivered to any of a variety of destinations.

In some examples, sites 104 are considered separate sites because although all lines 108 are located in the same building, the size of the building is such that lines 108-1, 108-2 and 108-3 are sufficiently distant from lines 108-4 and 108-5 to make controlling the two groups of lines (108-1, 108-2 and 108-3 in the first group, 108-4 and 108-5 in the second group) separately desirable. For example, the interior space of some buildings can be divided into bays (e.g. by walls, sliding doors or the like), each of which can contain one or more production lines. The lines in each bay can be considered separate sites due to the distance separating the bays. More generally, sites 104 are considered separate sites because the distances separating the lines 108 of each site 104 from each other are smaller than the distance separating the closest lines 108 of the different sites 104.

Inventory storage facility 112 and distribution facilities 116 can vary in number and location. For example, any one of, or any combination of, inventory storage facility 112 and distribution facilities 116, can be provided in system 100. Further, one or more of inventory storage 112 and distribution facilities 116 can be co-located with one of sites 104 (e.g. in the same building as site 104-1). Further, although FIG. 1 illustrates inventory storage 112 as supplying subcomponents to both sites 104-1 and 104-2, in other embodiments a plurality of inventory storage facilities can be provided, and any suitable combination of inventory storage facilities can supply any site 104. Similarly, although articles from site 104-1 are shown as being transferred to distribution facility 116-1 and articles from site 104-2 are shown as being transferred to distribution facility 116-2, in other embodiments both sites 104 can transfer finished articles to the same distribution facility 116, or to any suitable combination of distribution facilities.

The entity or entities operating sites 104 (e.g. the contract packagers mentioned above) generally receive orders for articles, for example from brand entities that engage the contract packagers to produce the articles. The orders can be fulfilled by sites 104, and more specifically, each order can be fulfilled by one or more of production lines 108. Upon receiving one or more orders, therefore, the entity operating a set of production lines 108 (whether at one site or distributed across a plurality of sites) is required to assign each order to one or more production lines 108.

Complicating the assignment of orders to production lines 108 are the facts that the capabilities and capacities of lines 108 vary. In addition, the distances between inventory storage locations (such as inventory storage 112) and sites 104 can vary from site to site (e.g. in FIG. 1, site 104-1 is shown as being further away from inventory storage 112 than site 104-2), and the distance between sites 104 and distribution facilities 116 can also vary from site to site. Further, earlier orders may have already been assigned to some lines 108. Other complicating factors can also occur, including the quantity of inventory available to fulfill orders, quality control requirements, and cost of service. As will be discussed below, additional components of system 100 implement functionality to automatically assign orders to production lines 108, taking the above factors into consideration.

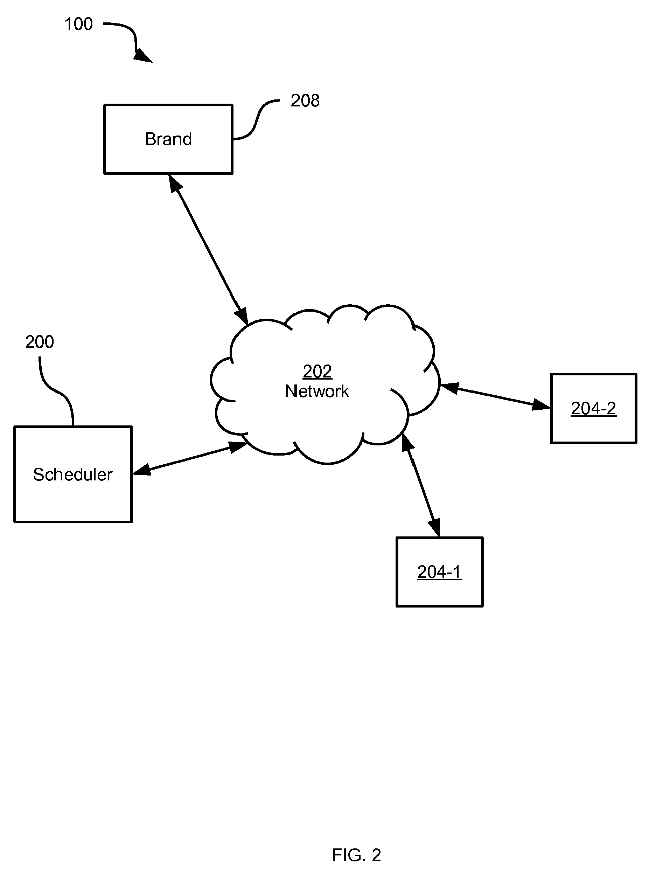

Referring now to FIG. 2, system 100 also includes a scheduler computing device 200, also referred to herein as device 200 or scheduler device 200, connected to a network 202. Also connected to network 202 are site computing devices 204-1 and 204-2. Site devices 204 can be located at sites 104-1 and 104-2, respectively, or can be located remotely from sites 104 and connected to additional computing devices at sites 104 via network 202. Additional computing devices (not shown) can also be included at (or connected to) sites 104. For example, a computing device can be installed at each line 108, and the line-specific computing devices at a given site can communicate with device 204-1 or 204-2. Also included in system 100 is a brand computing device 208. Brand device 208, in general, generates and sends the above-mentioned orders for fulfillment by lines 108.

Scheduler device 200, in general, is configured to store data defining the subcomponents and finished articles mentioned above, as well as data defining various attributes of production lines 108 and data defining various attributes of sites 104. Device 200 is configured to receive orders from brand device 208 (or any other suitable computing device), to retrieve the above-mentioned data, and based on the orders and the retrieved data, to assign each order to one or more production lines 108. The collection of assignments of orders to lines 108 is referred to as a production schedule. Device 200 can then be configured to select portions of the production schedule for transmission to respective site devices 204.

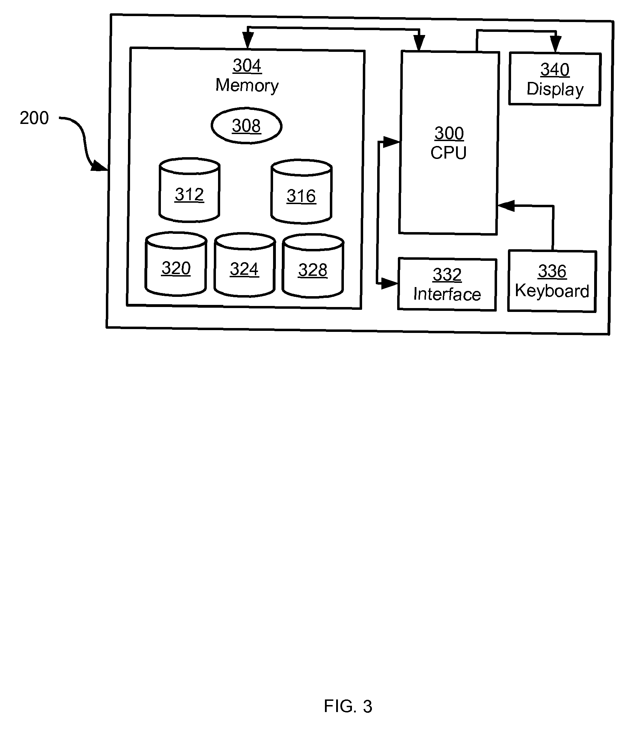

Before a description of the actions taken by scheduler device 200, a description of certain internal components of device 200 will be provided, with reference to FIG. 3.

As shown in FIG. 3, scheduler device 200 includes a central processing unit (CPU) 300, also referred to herein as processor 300, interconnected with a memory 304. Processor 300 and memory 304 are generally comprised of one or more integrated circuits (ICs), and can have a variety of structures, as will now occur to those skilled in the art (for example, more than one CPU can be provided). For example, memory 304 can be any suitable combination of volatile (e.g. Random Access Memory ("RAM")) and non-volatile (e.g. read only memory ("ROM"), Electrically Erasable Programmable Read Only Memory ("EEPROM"), and flash memory. In other embodiments, memory 304 can include a magnetic computer storage device, optical disc or other storage device, either instead of or in addition to any of the above.

Memory 304 stores computer readable instructions executable by processor 300, including a scheduling application 308. Processor 300 executes the instructions of scheduling application 308 to perform, in conjunction with the other components of device 200, various functions related to assigning orders to production lines 108. In the discussion below of those functions, device 200 is said to be configured to perform those functions, or to be operating to perform those functions - it will be understood that device 200 is so configured via the processing of the instructions in application 308 by the hardware components of device 200 (including processor 300 and memory 304).

Memory 304 can store various data used to implement the above-mentioned functions. In particular, memory 304 stores an items database 312, a production lines database 316, a site database 320, a schedule database 324, and a project or order database 328. The contents of the various databases in memory 304 will be discussed in greater detail below.

Scheduler device 200 also includes a network interface 332 interconnected with processor 300, which allows device 200 to connect to network 202 via a wired or wireless link. Network interface 332 thus includes the necessary hardware, such as network interface controllers and the like, to communicate over network 202. Device 200 can also include input devices interconnected with processor 300, such as a keyboard 336, as well as output devices interconnected with processor 300, such as a display 340. Other input and output devices (e.g. a mouse, speakers) can also be connected to processor 300. In some embodiments (not shown), keyboard 336 and display 340 can be connected to processor 300 via network 202 and another computing device. In other words, keyboard 336 and display 340 can be local (as shown in Figure 2) or remote.

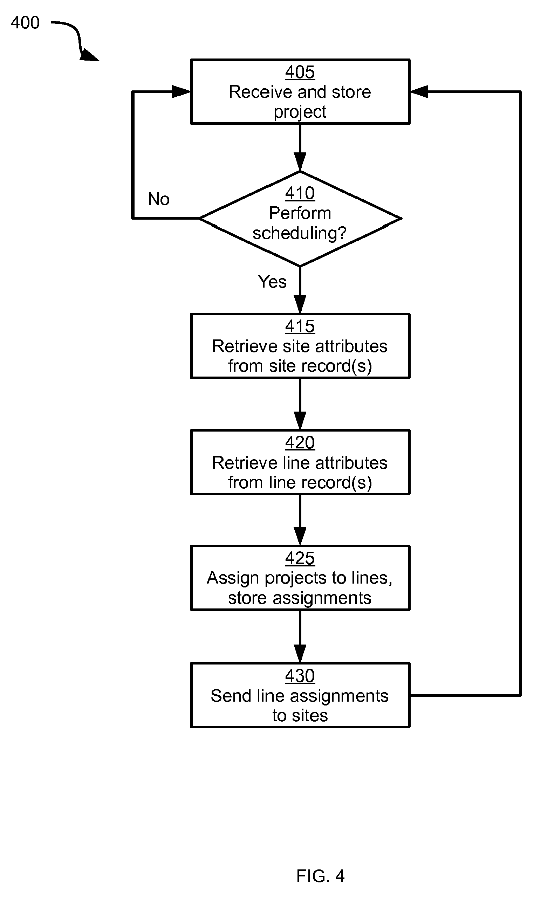

Referring now to FIG. 4, a method 400 of automatically assigning orders to production lines is depicted. The blocks of method 400 are performed by scheduler device 200, in particular via the execution of application 308 (stored in memory 304) by processor 300.

Beginning at block 405, processor 300 is configured to receive order data, also referred to as project data. The project data can be received via network 202 and network interface 332, for example from brand device 208. In some embodiments, however, the project data can be received at processor 300 as input data from input devices such as keyboard 336. Having received the project data, processor 300 is configured to store the project data in project database 328.

At block 410, processor 300 is configured to determine whether to perform a scheduling process. In the present embodiment, the scheduling process (that is, the remainder of method 400) is performed as a batch process. Therefore, the determination at block 410 can be a determination as to whether a predetermine time period has elapsed since the previous scheduling process was performed. In other embodiments, the determination at block 405 can be a determination as to whether a sufficient number of projects have been received at block 405 (or through successive performances of block 405) to reach a predetermined threshold.

When the determination at block 410 is negative, device 200 returns to block 405 and awaits further project data. In the present example performance of method 400, the determination at block 410 is whether three project records have been received at block 405 since the previous scheduling process. Thus, following the receipt of the third project, the determination at block 410 is affirmative, and the performance of method 400 proceeds to block 415. As mentioned above, the projects received at block 405 are stored in database 328. In the present example performance of method 400, upon receipt of the third project at block 405 (leading to an affirmative determination at block 410), database 328 appears as illustrated in Table 1:

**Table 1: Example Projects Database 328**

| **Project ID** | **Item ID** | **Quantity** | **Deadline** |
|---|---|---|---|
| 1 | A | 200 | June 20, 2015 |
| 2 | B | 50 | August 1, 2015 |
| 3 | A | 1000 | July 3, 2015 |

As seen in Table 1 above, database 328 includes a project record for each project received at block 405. Each project record includes an identifier of that project ("Project ID"), an identifier of the article to be produced for that project ("Item ID), a quantity of the article to be produced ("Quantity"), and a date by which the project must be complete ("Deadline"). In other embodiments, project records can include a variety of other data. For example, each project record can include a timestamp indicating when the project was received by device 200. In addition, in some embodiments device 200 can generate production schedules for more than one contract packager entity; therefore, each project record can also include an identifier of the entity to which the project is addressed. In such embodiments, the determination at block 410 can be performed separately for each entity. Further, each project record can include a flag indicating whether or not that record has been scheduled. In other embodiments, the project record can include a priority indicator (e.g. "high" or "low") rather than a specific deadline, or in addition to a specific deadline. Project records can also include various other data. For example, in some embodiments a project record can include one or more specific production line identifiers, indicating that the project must be assigned to a production line selected from those identifiers. In addition, some project records can include required quality control certifications for the project.

At block 415, device 200 is configured to retrieve site attributes from site database 320. When device 200 generates schedules for production lines operated by a plurality of entities, at block 415 device 200 is configured to retrieve site attributes for only the sites in database 320 having the same entity identifier as the projects received at block 405. In the present example performance of method 400, it is assumed that both sites 104-1 and 104-2 are operated by the same entity. Thus, at block 415 site attributes are retrieved for both sites 104 from site database 320, which appears as shown in Table 2:

**Table 2: Example Site Database 320**

| **Site ID** | **Line IDs** | **Origin Distance** | **Destination Distance** |
|---|---|---|---|
| 104-1 | 108-1; 108-2; 108-3 | 3km | 2km |
| 104-2 | 108-4; 108-5 | 1km | 5km |

As seen in Table 2, database 320 can include an identifier for each site ("Site ID), a list of identifiers of the production lines 108 at each site ("Line IDs"), a distance ("Origin Distance") from the site to the source of subcomponents for fabricating articles, such as inventory storage facility 112, and a distance ("Destination Distance") from the site to the destination of finished articles, such as distribution facilities 116. In other embodiments, rather than the above-mentioned distances, site records can include estimated travel times to the origin and destination sites, estimated shipping costs for shipping inventory to and from origin and destination sites, or both. In further embodiments, additional records in database 320 can define attributes for the origin and destination sites themselves, and the site records can simply refer to one or more origin sites and one or more destination sites, rather than include specific distances or travel times. In further embodiments, as mentioned above, scheduler device 200 can generate production schedules for more than one operating entity, and therefore each site record can also include an entity identifier. Various other data can be included in each site record, including quality control certifications of each site (e.g. Safe Quality Food (SQF), Food and Drug Administration (FDA) certifications, and the like).

Having retrieved site records corresponding to the projects to be scheduled, device 200 is configured, at block 420, to retrieve attributes of the production lines located at the sites for which site records were retrieved at block 415, as well as item attributes and existing schedule data. More specifically, item attributes are retrieved from item database 312, which in the present example embodiment appears as shown in Table 3:

**Table 3: Example Item Database 312**

| **Item ID** | **Subcomponents** | **Equipment Requirements** |
|---|---|---|
| A | X; Y | Bag sealer |
| B | X; Z | Bottle capper |
| X | N/A | N/A |
| Y | N/A | N/A |
| Z | N/A | N/A |

As seen in Table 3, item database 312 contains a record for each item handled by sites 104-1 and 104-2. Item data can be provided for database 312 by any one of, or any suitable combination of, brand device 208, site-specific devices 204-1 and 204-2, and scheduler device 200. Each item record includes an item identifier ("Item ID), and a list of subcomponents, where applicable. Each item record can also include one or more indicators of required pieces of equipment, steps required to manufacture the item, or the like. For example, the items "A" and "B" as shown above require specific pieces of equipment to manufacture (meaning that some production lines 108 may not be suitable for making those items).

Item database 312 can also include various other information. For example, each item record can include any one of, or any suitable combination of, cost information, physical measurements such as mass and dimensions, and the like.

Production line attributes are retrieved from production lines database 316, an example of which is shown below in Table 4.

**Table 4: Example Production Line Database 316**

| **Line ID** | **Equipment** | **Capacity** |
|---|---|---|
| 108-1 | Bag sealer | 100/day |
| 108-2 | Bottle capper | 1000/day |
| 108-3 | Vacuum sealer | 200/day |
| 108-4 | Bag sealer | 500/day |
| 108-5 | Vacuum sealer | 100/day |

As seen in Table 4, production line database 316 includes a record corresponding to each production line 108. Each line record includes a production line identifier ("Line ID") and one or more equipment indicators. Each line record can also include a capacity corresponding to each equipment indicator, indicating the speed at which the corresponding equipment is capable of operating (e.g. the number of items the equipment can process per unit of time). In other embodiments, each line record can also include other data, such as estimated setup or teardown times, staffing levels for one or more shifts, and the like.

In the present example performance of method 400, it is assumed that no previous scheduling data exists. Thus, at block 420 device 200 retrieves the item records having item identifiers that match the items identified in the project records received at block 405, and the line records having line identifiers that match the line identifiers in the site records retrieved at block 415. Device 200 can also be configured to retrieve available stock levels for the subcomponents of the requested articles. Such data can be contained with site records, for example, or within a separate database not shown in FIG. 3.

Having retrieved site, item and line data at blocks 415 and 420 (as well as prior scheduling data, if any), device 200 is configured, at block 425, to assign each of the projects received at block 405 to one or more of production lines 108 (more specifically, to one of the lines 108 for which line attributes were retrieved at block 420). In other words, device 200 is configured, for each project received at block 405, to select at least one line identifier, as well as a start time and an end time for the production line 108 corresponding to the selected line identifier to begin and end, respectively, production of the article identified in the project.

Processor 300 can implement any of a variety of algorithms to assign projects to production lines 108. In general, processor 300 is configured to select at least one production line 108, as well as start and end times, for each project, in order to minimize the time to completion of all projects received at block 405. In some embodiments, the time to be optimized by the assignments at block 425 is the time at which the required number of articles is produced by a given line 108 (or set of lines 108). In other embodiments, however, the time to completion can be the time at which those articles are delivered to either a distribution facility (e.g. distribution facility 116-1) or to a final destination subsequent to the distribution facility. In other words, in certain embodiments, the optimization process at block 425 can take into account location-based attributes of the production lines 108.

An example process performed by scheduler device 200 to implement block 425 is described below. First, scheduler device sets a start time for all production lines 108, indicating the time from which each line 108 is available. The start time is the start of the period of time to be covered by the schedule. Scheduler device is then configured to order the projects (e.g. those shown in Table 1) by deadline, with the project having the earliest deadline appearing first, in order to ensure that projects with an earlier deadline are scheduled before projects with a later deadline.

Following ordering of the projects by deadline, scheduler device 200 is configured, until all projects have been scheduled, to select the next project to schedule. The next project to schedule can be, for example, the first project in the ordered list mentioned above that has not already been scheduled (i.e. the unscheduled project with the nearest deadline).

For the selected project, scheduler device 200 is then configured to select a line 108 for the project based on line availability (i.e. the line 108 is not already assigned to another project), line assignments in the project record that require the use of a particular line 108, and material availability (i.e. whether sufficient material to complete the project is available to the line via inventory storage 112).

When a line 108 has been selected for the project, scheduler device 200 can also generate a plurality of job records for that line. For example, scheduler device 200 can store shift configuration data (e.g. start and end times of shifts on various days, indications of holidays and the like). Scheduler device 200 can also generate an estimated time required to complete the project (e.g. based on the number of articles required by the project and the production capacity of the selected line). Scheduler device 200 can therefore generate a plurality of jobs for the project at the selected line by determining the next available working time period for the selected line, assigning a job to the line for that working period, and subtracting the length of the working period from the total estimate time to complete the project. This process can be repeated until the total length of the jobs assigned to the selected line meets or exceeds the estimated time to complete the project.

Having performed the above scheduling actions for a project, scheduler device 200 stores the resulting line assignment and jobs in memory 304, and selects the next project to schedule, until all projects have been scheduled.

In the present example, a comparison of Tables 1 and 4 reveals that lines 108-1 and 108-4 (at sites 104-1 and 104-2, respectively) are suitable for performing projects 1 and 3 (which require the manufacture of item A, which requires production lines equipped with bag sealers). Line 108-4 is located at site 104-2, which is closer to inventory storage location 112 but further from distribution facilities 116. Thus processor 300 can be configured to assign project 1 to one of lines 108-1 and 108-4, and project 3 to the other of lines 108-1 and 108-4, based on which combination of assignments would result in both projects being completed most quickly. For example, project 3 may be assigned to line 108-4 because, despite the higher production capacity of line 108-4, the increased distance between line 108-4 and distribution facility 116-2 would result in a slower completion time for project 3 because larger quantities of item A may take significantly longer to transport than smaller quantities.

Processor 300 can also be configured to consider additional factors at block 425. For example, processor 300 can perform block 425 taking into account the availability of inventory, the availability of storage space (e.g. at distribution facilities 116), and the like. In addition, in embodiments where scheduling data has previously been generated (e.g. previous assignments of projects to production lines have been made), processor 300 can also be configured to select assignments at block 425 that do not conflict with any previous assignments.

Processor 300, through the performance of block 425, is configured to generate and store a schedule. The schedule includes a plurality of project assignment records, examples of which are shown for projects 1 and 3 below, in Table 5:

**Table 5: Example Schedule Database 324**

| **Project ID** | **Line ID** | **Item** | **Start** | **End** |
|---|---|---|---|---|
| 1 | 108-1 | A (200) | June 18, 2015 | June 19, 2015 |
| 3 | 108-4 | A (1000) | June 18, 2015 | June 19, 2015 |

Each project assignment record includes a project identifier matching the project identifier received at block 405, as well as a line identifier and an item identifier. Each project record also includes the quantity of the identified item to be produced, and start and end dates (and times, if desired) for the production of the identified item. Project assignment records can also include a variety of other data. For example, a project assignment record can include an identifier of the destination for the finished items, when multiple destinations are available.

At block 430, processor 300 is configured to select a portion of the assignments generated at block 425 for transmission to the site corresponding to that portion. Thus, at block 430, processor 300 can retrieve the site identifier corresponding to each line identified in Table 5 (e.g. by comparing the line identifiers in Table 5 to Table 2). Based on the retrieved site identifiers, processor 300 can group project assignment records by site for transmission to the appropriate one of devices 204-1 or 204-2.

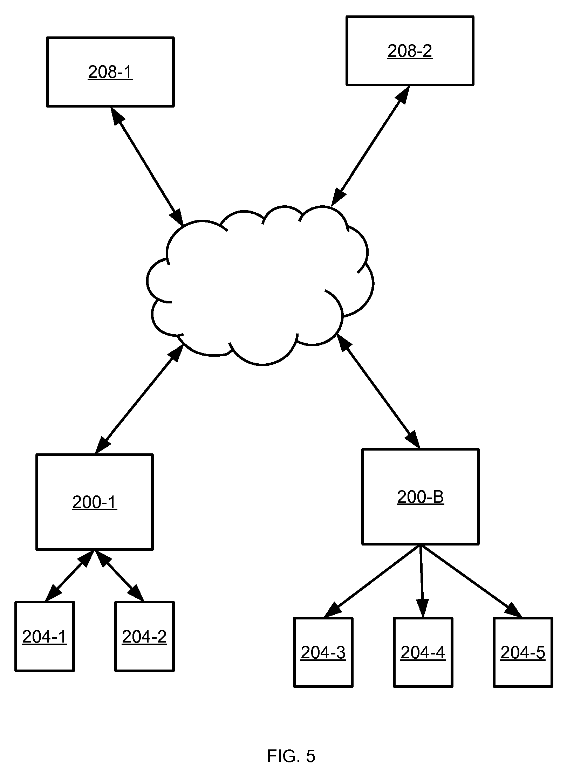

Various implementations for system 100 are contemplated. For example, turning to FIG. 5, a scheduler device 200 can be implemented separately by each contract packager entity. Thus, system 100 can include a plurality of devices 200, such as device 200-1 for a first contract packager entity (operating site-specific devices 204-1 and 204-2), and a device 200-2 for a second contract packager entity (operating site-specific devices 204-3, 204-4 and 204-5). Projects can be provided to each of devices 200 by brand devices 208-1 and 208-2 (as well as additional brand devices, not shown).

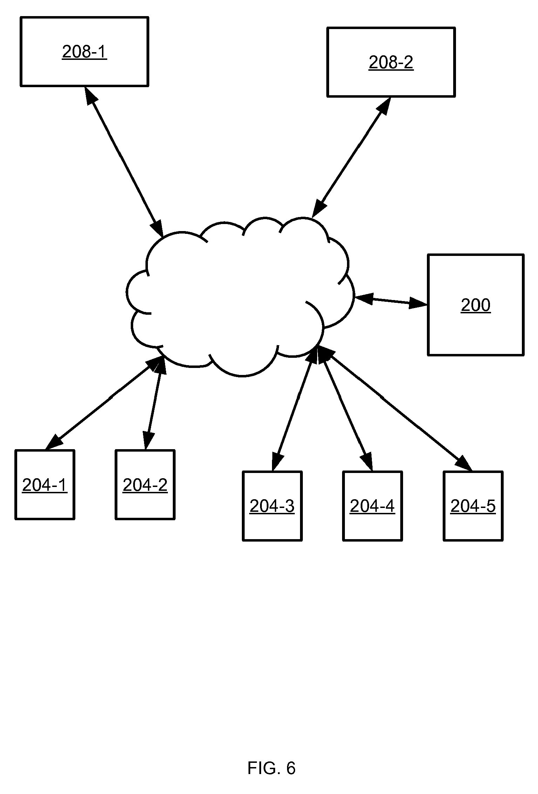

In another embodiment, shown in FIG. 6, a single scheduler device 200 receives projects from a plurality of brand devices (e.g. devices 208-1 and 208-2), and generates schedules for direct transmission to each site-specific device 204. In other words, scheduler device 200 receives projects and generates schedules for a plurality of brand entities and a plurality of contract packager entities.

Various advantages to the systems and methods described herein will occur to those skilled in the art. For example, the storage of site records in addition to line records permits system 100 to readily expand to include a greater number of sites, and also permits less time-consuming updates to be made to site-specific information, such as the location of inventory storage and distribution sites, in comparison with a system in which such information is stored solely in line records. As a further example, system 100 provides for the generation of schedules at a number of computing devices that is smaller than the number of sites to be managed, while still taking into account the characteristics of all of those sites. As a still further example, system 100 (particularly in the embodiment of FIG. 6) permits the elimination of some redundant data storage. For example, when device 200 generates schedules for a plurality of brands and a plurality of sites, item data defining attributes of items that are used at sites operated by different contract packager entities need only be stored in one location (at device 200).

The scope of the claims should not be limited by the embodiments set forth in the above examples, but should be given the broadest interpretation consistent with the description as a whole.

## Claims

1. A computing device, comprising:
a communications interface;
a memory storing a plurality of item records, a plurality of line records containing attributes of production lines, and a plurality of site records each containing identifiers of a subset of the production lines;
a processor interconnected with the communications interface and the memory, the processor configured to:
receive a project including an item identifier corresponding to an item record;
retrieve at least one of the site records;
retrieve the item record corresponding to the item identifier, and the line records identified in the at least one retrieved site record; and
select one of the retrieved line identifiers for the project based on the retrieved site records, the retrieved item record and the retrieved line records.

2. The computing device of claim 1, the processor further configured to:
receive a plurality of projects, each project including an item identifier corresponding to an item record.

3. The computing device of claim 2, the processor further configured to:
prior to retrieving the at least one site record, determine whether to schedule the plurality of projects.

4. The computing device of claim 3, the processor further configured to:
determine whether to schedule the plurality of projects by determining whether the plurality of projects exceeds a threshold number of projects.

5. The computing device of claim 3, the processor further configured to:
determine whether to schedule the plurality of projects by determining whether a predefined time period has elapsed since a previous scheduling process.

6. The computing device of claim 2, the processor further configured to:
repeat the selection of one of the retrieved line identifiers for each of the plurality of projects based on the retrieved site records, the retrieved item record and the retrieved line records.

7. The computing device of claim 6, the processor further configured to:
for each of the plurality of projects, transmit the selected line identifier via a network to a site computing device corresponding to the selected line identifier.

8. The computing device of claim 7, the processor further configured to:
retrieve an identifier of the site computing device for each of the selected line identifiers;
group a subset of the plurality of projects and corresponding selected line identifiers that have matching site computing device identifiers; and
transmit the subset of projects and corresponding selected line identifiers to the corresponding matching site computing device identifier via the network.

9. A method in a computing device having a communications interface, a memory and a processor, the method comprising:
storing, in the memory, a plurality of item records, a plurality of line records containing attributes of production lines, and a plurality of site records each containing identifiers of a subset of the production lines;
receiving a project including an item identifier corresponding to an item record;
retrieving at least one of the site records;
retrieving the item record corresponding to the item identifier, and the line records identified in the at least one retrieved site record; and
selecting one of the retrieved line identifiers for the project based on the retrieved site records, the retrieved item record and the retrieved line records.

10. The method of claim 9, further comprising:
receiving a plurality of projects, each project including an item identifier corresponding to an item record; and
prior to retrieving the at least one site record, determining whether to schedule the plurality of projects.

11. The method of claim 10, further comprising:
determining whether to schedule the plurality of projects by determining whether the plurality of projects exceeds a threshold number of projects.

12. The method of claim 10, further comprising:
determining whether to schedule the plurality of projects by determining whether a predefined time period has elapsed since a previous scheduling process.

13. The method of claim 9, further comprising:
repeating the selection of one of the retrieved line identifiers for each of the plurality of projects based on the retrieved site records, the retrieved item record and the retrieved line records.

14. The method of claim 13, further comprising:
for each of the plurality of projects, transmitting the selected line identifier via a network to a site computing device corresponding to the selected line identifier.

15. The method of claim 14, further comprising:
retrieving an identifier of the site computing device for each of the selected line identifiers;
grouping a subset of the plurality of projects and corresponding selected line identifiers that have matching site computing device identifiers; and
transmitting the subset of projects and corresponding selected line identifiers to the corresponding matching site computing device identifier via the network.
